# EUROPÄISCHE PATENTANMELDUNG

(11) **EP 3 960 340 A1**
(43) Veröffentlichungstag der Anmeldung: **02.03.2022**
(21) Anmeldenummer: 20192571.6
(22) Anmeldetag: 25.08.2020
(51) Int. Cl.: B22F 10/28, B22F 10/34, B22F 10/73, B22F 10/85, B29C 64/153, B29C 64/357, B29C 64/393, B33Y 50/02

(54) **ADDITIVES HERSTELLEN EINES OBJEKTS UND AKTUALISIEREN EINES PULVER-DATENSATZES**

(71) Anmelder: Siemens Aktiengesellschaft, 80333 München (DE)
(72) Erfinder: Krause, Stefan, 04177 Leipzig (DE); Lohse, Oliver, 85614 Kirchseeon (DE); Meyer-Hentschel, Michael Johannes, 81667 München (DE); Myszkowski, Adam, 81739 München (DE); Robl, Peter, 94133 Röhrnbach (DE)

(57) **Zusammenfassung**

Die Erfindung betrifft ein Verfahren zum Herstellen eines Objekts (100) mit einem pulverbasierten additiven Fertigungsverfahren. Die Erfindung betrifft weiterhin eine Steuerung (250) für eine Anlage mit einem Pulverbett zum Herstellen von Objekten mit einem pulverbasierten 3D-Druckverfahren, eine Koordinationseinheit (300) für ein oder mehrere Anlagen (200) sowie ein Verfahren zum Erzeugen von Trainingsdaten für neuronale Netzwerke. Um ein verbessertes Pulvermanagement für pulverbasierte additive Herstellungsverfahren anzugeben werden die folgenden Schritte vorgeschlagen:
- Bereitstellen eines Pulvers (40, 41, 42),
- Bereitstellen eines Pulver-Datensatzes (D40, D41, D42) für das Pulver (40, 41, 42),
- Herstellen des Objekts (100) durch selektives Verfestigen des Pulvers (40, 41, 42) unter Anwendung von Prozessparametern (P100),
- Aktualisieren des Pulver-Datensatzes (D40, D41, D42) mit zumindest einem Teil der Prozessparameter (P100) und/oder davon abgeleiteten Parametern.

## Beschreibung

Die Erfindung betrifft ein Verfahren zum Herstellen eines Objekts mit einem pulverbasierten additiven Fertigungsverfahren. Die Erfindung betrifft weiterhin eine Steuerung für eine Anlage mit einem Pulverbett zum Herstellen von Objekten mit einem pulverbasierten 3D-Druckverfahren, eine Koordinationseinheit für ein oder mehrere Anlagen sowie ein Verfahren zum Erzeugen von Trainingsdaten für neuronale Netzwerke.

Ein derartiges Verfahren kommt beispielsweise in 3D-Druck-Anlagen zum Einsatz.

Das Ergebnis beim pulverbasierten Additive Manufacturing (AM), auch 3D-Druck genannt, ist stark abhängig von zahlreichen Einflussgrößen, die sich zusätzlich gegenseitig beeinflussen. Im Wesentlichen wird die Qualität des AM-Erzeugnisses beeinflusst durch das eingesetzte Pulver, die Anlagenparameter des AM-Druckprozesses, das Druckprogramm und die Geometrie des angefertigten Teils. Weiterhin verändern sich die Materialeigenschaften des im Rahmen des AM-Prozesses eingesetzten Pulvers durch die Belichtungshäufigkeit und das anschließende Sieben. Da jedoch eine einheitliche Kennzeichnung und Verfolgung der Historie der Pulverchargen fehlt und somit eine Zuordenbarkeit nicht gegeben ist, wird der Pulverstatus im AM-Prozess vernachlässigt. Auch die Anlagenparameter werden oftmals initial einmalig eingestellt und können im weiteren AM-Druckverlauf modifiziert werden. Auch derlei Änderungen sind in der Praxis schwierig nachzuvollziehen und können Qualitätseinbußen nach sich ziehen. Auch Informationen bzw. Know How bzgl. der Prozesse kann hier verloren gehen.

Der Erfindung liegt die Aufgabe zugrunde, ein verbessertes Pulvermanagement für pulverbasierte additive Herstellungsverfahren anzugeben.

Diese Aufgabe wird durch ein Verfahren mit den im Anspruch 1 angegebenen Merkmalen gelöst.

Dazu wird ein Verfahren zum Herstellen ein oder mehrerer Objekte mit einem pulverbasierten 3D-Druckverfahren in einer Anlage mit einem Pulverbett vorgeschlagen. Das Verfahren umfasst die Schritte:
- Bereitstellen eines Pulvers,
- Bereitstellen eines Pulver-Datensatzes für das Pulver,
- Herstellen des Objekts durch selektives Verfestigen des Pulvers unter Anwendung von Prozessparametern,
- Aktualisieren des Pulver-Datensatzes mit zumindest einem Teil der Prozessparameter und/oder davon abgeleiteten Parametern.

Das Pulver kann dabei automatisiert aus einem Pulvermagazin zur Verfügung gestellt werden. Das Pulver weist dabei eine eindeutige Zuordnung zu seinem jeweiligen Pulver-Datensatz auf. Dies kann durch ein jeweiliges Pulver-Gebinde mit einer eindeutigen Kennung realisiert werden.

Der Pulver-Datensatz kann dabei grundlegende Informationen umfassen wie z. B. Legierungsinformationen des Pulvers, Korngröße, Korngrößenverteilung, Korn-Rundheit und Dichte. Der Pulver-Datensatz kann darüber hinaus ein oder mehrere der Parameter wie Öffnungsalter des Gebindes, Herstelldatum des Gebindes Thermische Einwirkung auf das Pulver des Gebindes aufweisen.

Die erfindungsgemäße Verfahren ermöglicht so einen geführten Prozess zu einer höheren und automatisierten Erfassungsrate der Prozess- und Pulverparameter sowie eine Zusammenführung der im Laufe des AM-Prozesses anfallenden Informationen. Die so entstehenden Daten vereinfachen eine Analyse der Hergestellten Objekte durch eine gegenseitigen Korrelation der Ergebnisse mit den Daten.

Die verwendeten Pulverchargen sind vorzugsweise mit einer eindeutigen Kennung auf ihrem Gebinde versehen und so mit ihrem Pulver-Datensatz verknüpft. Dies kann bspw. als ein Pulverbuchungssystem ausgestaltet sein, das eine detaillierte Einsicht in eine Art Pulverlebensakte, die Lebenszyklusdaten des Pulvers enthält, inklusive der Lieferanteninformationen (Legierungsinformationen des Pulvers, Korngröße, Korngrößenverteilung, Korn-Rundheit, Dichte), der verwendeten AM-Maschinen in den vorangehenden Druckprozessen, der Belichtungshäufigkeit und der Siebparameter des wiederverwendeten Pulvers.

Die Prozessparameter umfassen dabei sämtliche Parameter, die zur Herstellung des Objekts mit der Anlage verwendet und/oder überwacht werden. Dazu zählen einstellbare Parameter, wie die Strahlleistung des Energiestrahls (z. B. Laser) ebenso wie sich einstellende Parameter, wie die Temperatur im Pulverbett.

Um Mengeneffekte abzubilden kann die verwendete Menge des Pulvers durch ein Abwiegen digital aus der zugehörigen Charge, z. B. aus dem zugehörigen Gebinde (Pulverbehälter) ausgebucht werden. In anderen Worten wird das durch das Objekt verbrauchte Pulver nicht mit im aktualisierten Pulver-Datensatz berücksichtigt. Analog kann das nach dem Herstellen verbleibende Pulver wieder in die entsprechende Charge und dessen Gebinde eingebucht werden. Eine Charge kann dabei aus mehreren Gebinden bestehen. Chargenvermischungen beim Einlagern des verwendeten Pulvers sind so nachvollziehbar bis hin zum Lagerort der Pulverbehälter.

In einer weiteren Ausführungsform umfasst das Aktualisieren des Pulver-Datensatzes ein Selektieren der Prozessparameter, insbesondere ein Komprimieren von Prozessparametern. Das Selektieren kann dabei ein Auswählen von Parametern umfassen, die einen Einfluss auf ein im Pulverbett verbleibendes Pulver aufweisen. Dies können sowohl eingestellte als auch sich einstellende Parameter sein. Die Auswahl kann sich dabei bei weniger relevanten Prozessen auf einzelne Parameter wie eine Maximaltemperatur beschränken. Bei hochempfindlichen Prozessen kann hin bis zu einem Erfassen des kompletten Temperaturverlauf des Pulverbetts im Pulver-Datensatz gehen, um bereits geringste Auswirkungen auf die Pulverqualität beurteilen zu können. Das Selektieren der Prozessparameter kann dabei auch eine bedingte Aktualisierung umfassen. In anderen Worten wird der Pulver-Datensatz nur dann mit bestimmten Parametern aktualisiert, wenn diese Parameter außerhalb eine bestimmten Spezifikation liegen. Beispielsweise könnten also Temperatureinwirkungen erst ab einem bestimmten Grenzwert aktualisiert oder eine Art Markierung im Pulver-Datensatz gesetzt werden, wenn das Pulver einen Grenzwert überschritten hat.

Ein Komprimieren kann das Bereinigen von Daten umfassen, also z.B. ein Temperaturverlauf, der um niedrige, für das Pulver irrelevante Temperaturen bereinigt wird, da für die Pulverqualität nur die Dauer von hohen Temperaturen relevant ist. Selbstverständlich können übliche verlustfreie Kompressionsalgorithmen auf die Daten angewandt werden.

In einer weiteren Ausführungsform umfasst der Pulver-Datensatz zumindest einen oder mehrere der folgenden Parameter oder wird mit einem oder mehreren dieser Parameter aktualisiert:
- Temperaturverlauf im Pulverbett,
- Maximaltemperatur im Pulver,
- Belichtungsdauer des Pulvers,
- Belichtungsintensität,
- Belichtungshäufigkeit des Pulvers,
- Absauggeschwindigkeit von Rest-Pulver,
- Siebgröße einer Absaugeinrichtung,
- Verweildauer des Pulvers im Pulverbett,
- Atmosphäre in der Anlage
- Korn-Rundheit,
- Korngrößenverteilung,
- Kornrundheit,
- Pulver-Dichte.

Es kann ein Basis-Pulver-Datensatz festgelegt werden, der für jedes Pulver zur Verfügung steht und ein erweiterter Pulver-Datensatz, der für besonders hochwertige Pulver erfasst wird. Die Parameter können dabei als Historie vorliegen, d. h. die Parameter stehen vor dem Herstellen des Objekts zur Verfügung und werden nach dem Herstellen des Objekts aktualisiert.

In einer weiteren Ausführungsform stammt das Pulver aus zumindest einem Gebinde, wobei der jeweilige Pulverdatensatz dem Gebinde eindeutig zugeordnet ist. Ein Gebinde weist also genau einen Datensatz auf. Eine Durchmischung des Pulvers kann berücksichtigt werden, indem Mischverhältnisse durch Gewichtsanteile durch Ein- und Ausbuchen in den Behälter erfasst und berücksichtigt werden.

In einer weiteren Ausführungsform wird der aktualisierte Pulver-Datensatz einem Baujob-Datensatz zugeordnet. Um weitere Analysen zu ermöglichen hat es sich als vorteilhaft herausgestellt, dass einen Baujob-Datensatz mit dem Pulverdatensatz zu verknüpfen. Der Baujob-Datensatz kann dabei ein von einer Anlagensteuerung verarbeitbares 3D CAD Modell sein, ein STL-File bis hin zu tiefgreifenden Anlagenparametern, die Lage für Lage und positionsabhängig eine Leistung zur Verfestigung des Pulvers beschreiben. Der Baujob-Datensatz umfasst dabei die Daten, die von der Anlage zum Herstellen des Objekts benötigt werden. Der Baujob-Datensatz kann in einem universellen Format vorliegen und Anlagenspezifisch durch eine Umsetzungskomponente angepasst werden, sodass eine Herstellung des Objekts auf mehreren Anlagen möglich ist. Es kann sinnvoll sein, die Daten in ein vergleichbares Format zu überführen. Dabei kann Anlagenspezifisch eine Übersetzungskomponente vorgesehen sein, die Anlagenspezifische Daten in ein vergleichbares, insbesondere genormtes Format überführen. So kann ein Pulver mit verschiedenen Anlagen verwendet werden und eine durchgehend vergleichbare Qualität sichergestellt werden.

In einer weiteren Ausführungsform wird der aktualisierte Pulver-Datensatz den Prozessparametern zugeordnet. Zwar sind die Prozessparameter durch das Aktualisieren der Pulver-Datensätze auch Teil der Pulver-Datensätze, es kann aber für spätere Analysen auch wichtig sein dass, ein vollständiger Satz von Prozessparametern mit den entsprechenden Pulver-Datensatz vor und nach der Herstellung des Objekts zur Verfügung steht.

In einer weiteren Ausführungsform wird das Pulver aus einem ersten Gebinde bereitgestellt, wobei ein Rückführen von nach Fertigstellung des Objekts verbleibenden Pulvers in das erste Gebinde erfolgt, wenn die aktualisierten Pulver-Daten definierbare Grenzwerte nicht überschreiten. Alternativ oder ergänzend können weitere Gebinde vorgesehen sein, in die das verbleibende Pulver gelagert werden, wenn gewisse Grenzwerte überschritten wurden. Hier kann auch eine Schnittstelle an ein Recycling erfolgen, dass bspw. ein Einschmelzen von grenzwertigem Pulver ermöglicht. Als Grenzwerte kommen z. B. eine Korngrößenverteilung, oder die Belichtungsintensität in Frage. In anderen Worten, das Pulver wurde zu lange zu intensiv belichtet, so dass sich die Eigenschaften verändert haben können und damit für Produkte mit gewissen Anforderungen nicht mehr geeignet ist.

In einer weiteren Ausführungsform umfasst das Verfahren ein Auslesen des Pulver-Datensatzes durch eine Steuereinheit der Anlage vor einem Herstellen des Objekts und ein Anpassen der Prozessparameter auf Basis des Pulver-Datensatzes. Diese besonders vorteilhafte Ausführungsform verknüpft die Pulverdaten direkt mit den Prozessparametern. So kann bei einem Pulver, das alterungsbedingt bereits eine höhere Porositätsneigung aufweist entsprechend durch Parameter gegengesteuert werden, wenn die Porosität unerwünscht ist.

In einer weiteren Ausführungsform umfasst das Verfahren ein Analysieren des nach dem Fertigstellen des Objekts verbleibenden Pulvers und Aktualisieren des Pulver-Datensatzes auf Basis der Analyse. Das Nachverfolgen des Pulvers-Lebenszyklus durch die Pulver-Datensätze schafft die Möglichkeit, den Einfluss der Pulverparameter am fertigen, additiv hergestellten Objekt zu ermitteln. Die Pulvereigenschaften (z.B. Korngröße, Korngrößenverteilung, Korn-Rundheit, Dichte) verändern sich je nach Einsatzhäufigkeit und -intensität des Pulvers und beeinflussen unter anderem die Porosität des Fertigteils. Auch Pulveranalysen können hier stattfinden, z.B. kann ein bereits eingesetztes Pulver auf die Korngrößen-Verteilung untersucht werden, bevor es wiedereingesetzt wird. Die Analyseergebnisse können zum Aktualisieren des Pulver-Datensatzes verwendet werden.

In einer weiteren Ausführungsform umfasst das Verfahren ein Analysieren des Objekts und/oder eines im selben Druckvorgang oder unter Verwendung derselben Prozessparameter hergestellten Testkörpers und Aktualisieren des Pulver-Datensatzes auf Basis der Analyse. Durch das Bereitstellten von Daten, wie sich das Pulver im verfestigten Zustand verhält, können weitere Erkenntnisse gewonnen werden.

In einer weiteren Ausführungsform umfasst das Verfahren ein Analysieren des nach dem Fertigstellen des Objekts verbleibenden Pulvers und Aktualisieren des Pulver-Datensatzes auf Basis der Analyse. Durch ein gezieltes Analysieren der Pulverparameter im Anschluss an den Pulvereinsatz während des Herstellens können die Pulverparameter zu jedem Zeitpunkt des AM-Prozesses abgerufen werden und können beim Herstellen weiterer Objekte berücksichtigt werden. Die Analyse kann automatisiert in einer Pulverabsaugvorrichtung durchgeführt werden. Weiterhin kann die Analyse auch mikroskopisch erfolgen. So können den Prozessinformationen auch Qualitätsinformationen dem Baujob zugewiesen. Bei den Qualitätsinformationen kann es sich um analytische Untersuchungen des Fertigteils bzw. des parallel gedruckten Prüfkörpers handeln, wie beispielsweise Computertomografie zur Bestimmung der Porosität oder um mechanische Zugversuche. Durch das Zusammenbringen der Prozessparameter und der Qualitätsdaten sind die Auswirkungen der Inputparameterveränderungen auf das Fertigteil nachvollziehbar.

Die Aufgabe wird weiterhin durch ein computerimplementiertes Verfahren zum Selektieren eines Pulvers und/oder eines Pulver-Gebindes zum Herstellen eines Objekts gelöst, wobei für die zur Auswahl stehenden Pulver (-Gebinde) Pulver-Datensätze bereitgestellt sind, umfassend die Schritte:
- Bestimmen ein oder mehrerer Güte-Anforderungen an das Objekt,
- Auswählen des Pulvers durch Abgleichen der Güte-Anforderungen mit den Pulver-Datensätzen.

So kann ein Herstellen von Objekten mit verschiedenen Qualitätsstufen des Endprodukts realisiert werden. Als Gütekriterien können beispielsweise eine Ziel-Porosität, eine Ziel-Zugfestigkeit, eine Ziel-Oberflächengüte sowie weitere mechanische Eigenschaften des Objekts definiert werden.

Weiterhin ist denkbar, dass nicht nur das Pulver anhand er Güte-Anforderungen ausgewählt wird, sondern die Güte-Anforderungen maßgeblich die Prozess-Parameter beeinflussen. So kann der aktuelle Zustand des Pulvers direkt in die Prozessparameter mit einfließen.

Die Aufgabe wird weiterhin durch eine Steuerung für eine Anlage mit einem Pulverbett zum Herstellen von Objekten mit einem pulverbasierten 3D-Druckverfahren. Die Steuerung ist dabei zum Durchführen des erfindungsgemäßen Verfahrens ausgebildet und weist eine Schnittstelleneinheit auf, die zum Aktualisieren des Pulver-Datensatzes zumindest einen Teil der Prozessparameter und/oder davon abgeleiteten Parametern bereitstellt und/oder anfordert. Die Steuerung kann weiterhin dazu ausgebildet sein, den Pulver-Datensatz selbst zumindest teilweise zu aktualisieren und weitere Daten an einen übergeordneten Rechner zur Verfügung zu stellen, der dann erste Analysen durchführt. Die Steuerung kann eine Speichereinheit aufweisen, die zumindest für die konkrete Anlage die Pulver-daten historisiert. So kann ein Übertrag der Pulverdatenart zyklisch an eine übergeordnete Datenbank und/oder an eine übergeordnete Koordinationseinheit durchgeführt werden.

Die Aufgabe wird weiterhin durch eine Koordinationseinheit für ein oder mehrere Anlagen mit einem Pulverbett zum Herstellen von Objekten mit einem pulverbasierten 3D-Druckverfahren gelöst. Die Koordinationseinheit ist zum Bereitstellen von Pulver-Datensätzen und zum Bereitstellen und/oder Anfordern von Prozessparametern und/oder davon abgeleiteten Parametern zum Aktualisieren der Pulver-Datensätze ausgebildet. Eine derartige Koordinationseinheit kann als Cloudlösung oder als lokale Lösung auf einem lokalen Rechner/Server bereitgestellt werden. Die Koordinationseinheit kann dabei zum Verknüpfen von Pulver-Datensätzen mit Baujob-Daten ausgebildet sein. Vorzugsweise werden die Pulverdatensätze in ihrem Verlauf also mit den jeweilig aktualisierten Pulverdatensätzen in einer nachvollziehbaren Weise mit den Baujob-Daten, die zu den aktualisierten Pulverdatensätzen geführt haben, abgelegt. So entsteht eine Reihe von Pulverdatensätzen, die auseinander entstanden sind, wobei die diese durch Herstellen von Objekten durch Baujob-Daten ineinander überführt worden sind.

Mit dem erfindungsgemäßen Verfahren können ebenso einfach und effizient Trainingsdaten für neuronale Netzwerke erzeugt werden. Dazu werden mehreren Objekte mit dem eingangs erläuterten Verfahren hergestellt. Weiterhin umfasst das Verfahren das Bereitstellen von Pulver-Datensätzen, aktualisierten Pulver-Datensätzen und den dazugehörigen Baujob-Datensätzen und ein jeweiliges Verknüpfen des Pulver-Datensatzes mit dem dazugehörigen Baujob-Datensatz und dem daraus resultierenden aktualisierten Pulver-Datensatz. In anderen Worten werden als Eingangsdaten die ursprünglichen Pulver-Datensätze bereitgestellt. Es ist möglich, dass die Pulver-Datensätze einen Verlauf aufweisen, sodass nur ein Pulver-Datensatz bereitgestellt werden muss, der aber eine Reihe mit aktualisierten Pulver-Datensätzen aufweist. Die jeweiligen Baujob Daten sind dann entsprechend der Reihe verknüpft, sodass ein Muster nach dem Schema ein Eingangs-Pulver-Datensatz wird durch einen Baujob-Datensatz in einen aktualisierten Pulver-Datensatz als Ausgangsgröße überführt. Dieses Datenschema kann zum Trainieren von neuronalen Netzten oder anderen Algorithmen des maschinellen Lernens verwendet werden. Die Pulver-Datensätze und die dazugehörigen Baujob-Datensätze, die zum Herstellen der Objekte verwendet wurden, können dabei bereitgestellt, z. B. in einer geeigneten Form gespeichert und zueinander zugeordnet.

Generell können mit der vorliegenden Erfindung auch initiale Anlagen-Einstellparameter (als Teil der Prozessparameter) dokumentiert und mit den Pulver-Datensätzen verknüpft werden. Nachträgliche Veränderungen von Anlagenparametern im Laufe des AM-Prozesses oder Prozessabbrüche können ebenfalls erfasst werden. Daneben kann ein fest definierter Parametersatz (z.B. als Baujob-Parameter) über eine Anlagenschnittstelle z.B. aus der Anlagensteuerung oder einem Edge Device dem Baujob zugewiesen werden. Durch die integrierte Dateiverwaltung des Druckprogramms, der geometriebeschreibenden Datei und von prozessbeschreibenden Dokumenten des Baujobs ist die Zuordenbarkeit des tatsächlichen Prozessablaufs inklusive der tatsächlichen Maschinen-Verfahrwege gegeben. Zusätzlich erfassen die maschinell erzeugten Log-Files des Baujobs laufend den AM-Maschinenstatus und bilden somit eine Grundlage für tiefergehende Analysen.

Die Zuordnung von Dateien und Dokumenten zum Baujob-Datensatz kann über eine Upload-Schnittstelle stattfinden. Der Maschinenbelegungsstatus und die AM-Prozessphase des jeweiligen Baujobs kann transparent auf einem Maschinen-Planungsboard abgebildet werden, so dass nachfolgende Baujobs auf den freiwerdenden Maschinen eingeplant werden können.

Im Folgenden wird die Erfindung anhand der in den Figuren dargestellten Ausführungsbeispiele näher beschrieben und erläutert. Es zeigen:
- FIG 1: eine schematische Darstellung des Verfahrens,
- FIG 2: schematisch das Aktualisieren des Pulverdatensatzes und
- FIG 3: ein Flussdiagramm bzgl. der Daten im Verfahren.

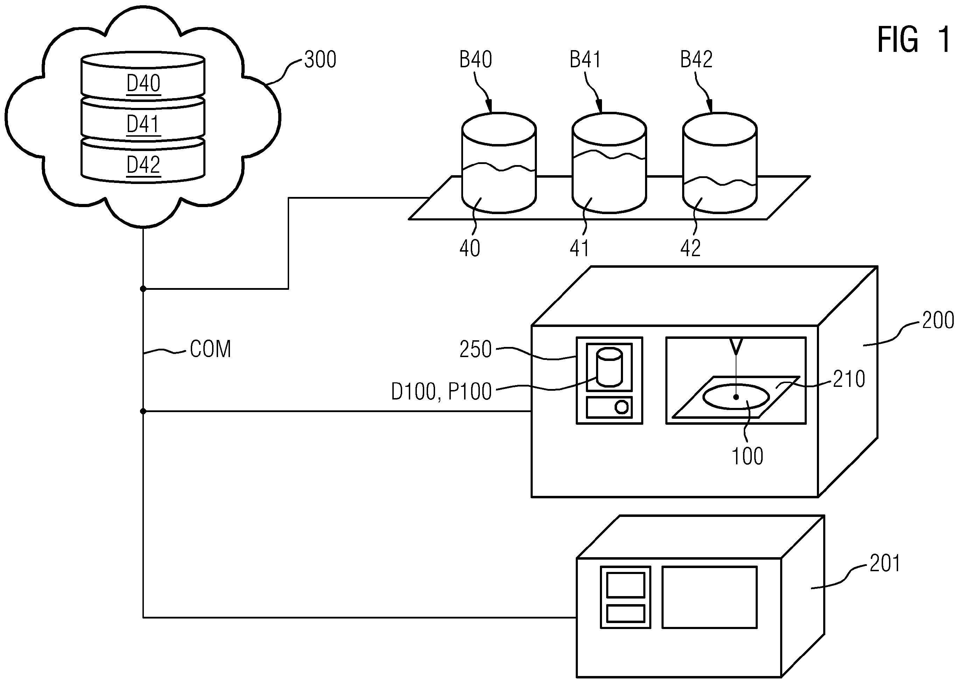

FIG 1 zeigt ein Ausführungsbeispiel einer schematische Darstellung von am Verfahren beteiligten Anlagen 200, 201. die Anlage 200 ist dabei beispielsweise ein 3D-Drucker, auf Basis eines Energiestrahls. Hier kommen bspw. selektives Lasersintern oder Selektives Laserschmelzen in Frage. Auch elektronenstrahlbasierte Verfahren sind Motive. Die Anlage 200 weist ein Pulverbett 210 auf, auf dem ein Objekt 100 gefertigt wird soll. Ein Baujob-Datensatz D100 für das Objekt 100 ist in einer Steuerung 250 der Anlage 200 gezeigt. In diesem Fall umfasst der Baujob-Datensatz D100 zumindest ein 3D CAD Modell sowie die Parameter, die die Anlage 200 ansteuern. Die Steuerung 52 benutzt dabei die Parameter, die in dem Baujob-Datensatz D100 hinterlegt sind, um die Anlage so anzusteuern, dass das Objekt 100 gefertigt wird. Der Baujob-Datensatz D100 ist dabei in der Regel weitestgehend anlagen-unspezifisch und umfasst beispielsweise ein 3D CAD Modell und Materialparameter. Erst die Prozessparameter P100, die aus dem Baujob-Datensatz D100 abgeleitet werden sind anlagenspezifisch. Es ist möglich einen Baujob-Datensatz D100 bereits mit den Prozessparametern P100 zu versehen, es ist aber ebenso denkbar, dass die Steuerung 250 die Prozessparameter P100 zur Herstellung des Objekts 100 selbst aus dem Baujob-Datensatz D100 generiert.

Weiterhin ist ein erstes Pulver 40, ein zweites Pulver 41 und ein drittes Pulver 42 gezeigt. Die Pulver 40, 41, 42 sind dabei jeweils in einem eigenen Gebinde B40, B41, B42 angeordnet. Die Pulver 40, 41, 42 können dabei in einer automatisierten Pulvermagazin gelagert werden, das die Pulver 40, 41, 42 bzw. die Gebinde B40, B41, B42 automatisch ein und ausgelagert.

Für jedes der Pulver 40, 41, 42 ist ein Pulverdatensatz D40, D41, D42 gezeigt. Die Pulverdatensätze D40, D41, D42 sind in diesem Fall zentral in einer Koordinationseinheit 300, z. B. in der Cloud, gespeichert. Die Pulverdatensätze D40, D41, D42 können aber auch lokal am Ort des jeweiligen Pulver-Lagers gespeichert werden.

Die Gebinde B40, B41, B42 weisen dabei vorzugsweise eine eindeutige maschinenlesbare Kennung auf. Die maschinenlesbare Kennung ist dabei mit einem eindeutig zuweisbaren Pulverdatensatz D40, D41, D42 für jedes der Pulver 40, 41, 42 verknüpft.

Die Pulver-Datensätze D40, D41, D42 sind im vorliegenden Fall schematisch in einer cloudbasierten Koordinationseinheit 300 angeordnet. Die Pulver-Datensätze D40, D41, D42 können ebenso lokal und zentral oder dezentral mit den Baujob-Datensätzen D100 gespeichert werden.

Die Koordinationseinheit 300 ist über eine Kommunikationsverbindung COM, z. B. Ethernet oder WLAN, mit der Anlage 200 und einer weiteren Anlage 201 verbunden. So kann die Koordinationseinheit 300 für mehrere Anlagen 200, 201 die Pulver-Datensätze D40, D41, D42 verwalten, d.h. für den Produktionsprozess bereitstellen, die Aktualisierung der Pulver-Datensätze D40, D41, D42 und die Zuordnung der Pulver-Datensätze D40, D41, D42

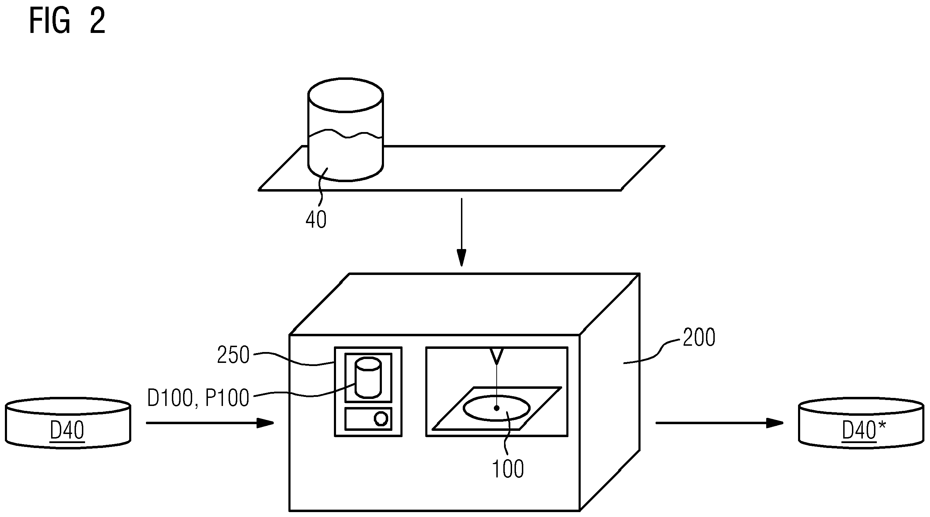

FIG 2 zeigt einen schematischen Verlauf des Aktualisierens eines Pulver-Datensatzes D40. Dazu wird der Pulver-Datensatz D40 bspw. von einem Server bereitgestellt. Der Pulver-Datensatz D40 existiert bereits vor Herstellung des Objekts 100 für das ausgewählte Pulver 40. Der Pulver-Datensatz D40 kann dabei einen Datensatz umfassen, der auf Herstellerdaten basiert, z. B. wenn ein neues Gebinde angebrochen wird. Wenn das Pulver 40 aus dem Gebinde B40 bereits mehrfach zum Drucken in Gebrauch war, so kann der Datensatz D40 bereits mit entsprechenden Prozessparametern von vorhergehenden Herstellverfahren aktualisiert sein.

Die Steuerung 250 hat einen Baujob-Datensatz D100 geladen, aus dem für die Anlage 200 spezifische Prozessparameter P100 zur Herstellung des Objekts 100 generiert werden.

Ein aktualisierter Pulver-Datensatz D40* wird schließlich aus dem Pulver-Datensatz D40 unter Einbeziehung der Prozessparametern P100 oder davon abgeleiteten Parametern generiert. Das Aktualisieren selbst kann die Steuerung 250 durchführen. Alternativ oder ergänzend kann eine übergeordnete Instanz, z.B. die in FIG 1 gezeigte Koordinationseinheit 300 oder eine Cloud-Instanz die Aktualisierung des Pulver-Datensatz D40 durchführen. Es ist dazu möglich, dass die Steuerung 250 die Prozessparameter P100 oder eine Auswahl davon zur Aktualisierung bereitstellt, z. B. per Publish-Subscribe-Mechanismen, wie sie bspw. in OPC UA vorgesehen sind oder an einer entsprechenden Schnittstelle.

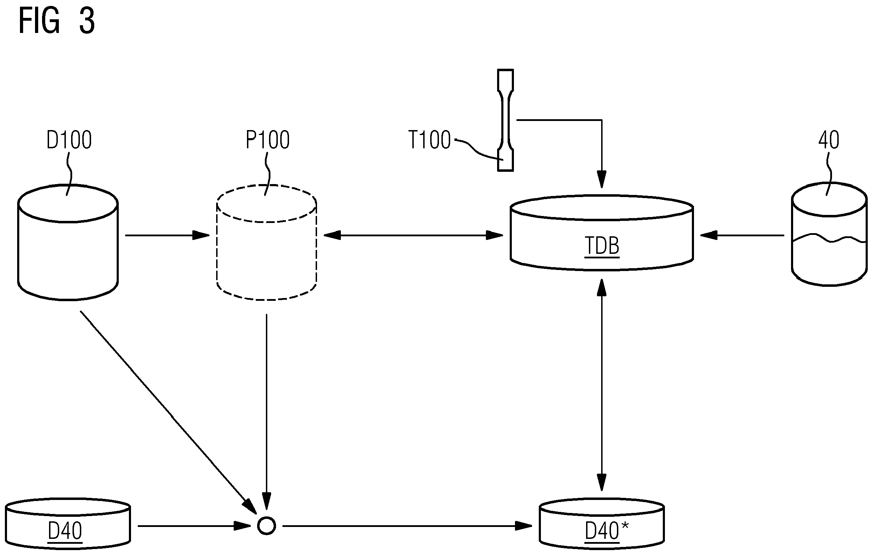

FIG 3 zeigt schematisch ein Flussdiagramm, das auf Basis von einem Pulver-Datensatz D40 einen aktualisierten Pulver-Datensatz D40* erzeugt. Dazu wird für ein nicht gezeigtes Objekt 100 ein Baujob-Datensatz D100, also bspw. ein 3D-CAD-Modell und Prozessparameter P100 zum Herstellen des Objekts 100 zur Verfügung gestellt. Die Pfeile deuten dabei an, dass Daten verknüpft oder in Relation zueinander abgespeichert werden können und mit in den aktualisierten Pulver-Datensatz D40* einfließen können und insbesondere als Hintergrundinformation für den aktualisierten Pulver-Datensatz D40* in einer strukturierten Art und Weise zur Verfügung stehen. Weiterhin ist eine Test-Datenbank TDB zu sehen, in die Prozessparameter P100 und Ergebnisse einer Prüfung und oder Analyse abgespeichert werden. Vorliegend wird beispielsweise ein als Zugversuch-Testkörper ausgebildeter Testkörper T100 analysiert. Die Ergebnisse können wiederum in die Prozessparameter P100 für folgende Objekte 100 einfließen und werden in der Test-Datenbank TDB hinterlegt. Weiterhin ist gezeigt, dass ein Pulver 40 ebenfalls analysiert werden kann und die Ergebnisse in der Test-Datenbank TDB hinterlegt werden. Die Ergebnisse der Analysen können dann auch in den aktualisierten Pulver-Datensatz D40* einfließen und dort verknüpft werden. Die Anordnung zeigt, dass eine strukturierte Erfassung und Verknüpfung der im Prozess des additiven Fertigens anfallenden Daten mit der Erfindung möglich ist und erhebliche Verbesserungen am Prozess ermöglicht.

Zusammenfassend betrifft die Erfindung ein Verfahren zum Herstellen eines Objekts 100 mit einem pulverbasierten additiven Fertigungsverfahren. Die Erfindung betrifft weiterhin eine Steuerung 250 für eine Anlage mit einem Pulverbett zum Herstellen von Objekten mit einem pulverbasierten 3D-Druckverfahren, eine Koordinationseinheit 300 für ein oder mehrere Anlagen 200 sowie ein Verfahren zum Erzeugen von Trainingsdaten für neuronale Netzwerke. Um ein verbessertes Pulvermanagement für pulverbasierte additive Herstellungsverfahren anzugeben werden die folgenden Schritte vorgeschlagen:
- Bereitstellen eines Pulvers 40, 41, 42,
- Bereitstellen eines Pulver-Datensatzes D40, D41, D42 für das Pulver 40, 41, 42,
- Herstellen des Objekts 100 durch selektives Verfestigen des Pulvers 40, 41, 42 unter Anwendung von Prozessparametern P100,
- Aktualisieren des Pulver-Datensatzes D40, D41, D42 mit zumindest einem Teil der Prozessparameter P100 und/oder davon abgeleiteten Parametern.

### Bezugszeichen

- 40, 41, 42: Pulver
- D40, D41, D42: Pulver-Datensatz
- D40*, D41*, D42*: aktualisierter Pulver-Datensatz
- B40, B41, B42: Gebinde der Pulver
- 100: Herzustellendes Objekt
- T100: Testkörper
- TDB: Test-Datenbank
- D100: Baujob-Datensatz
- P100: Prozessparameter zum Herstellen des Objekts
- 200: Anlage
- 210: Pulverbett der Anlage
- 250: Steuerung der Anlage
- 300: Koordinationseinheit
- COM: Kommunikationsverbindung

## Patentansprüche

1. Verfahren zum Herstellen ein oder mehrerer Objekte (100) mit einem pulverbasierten 3D-Druckverfahren in einer Anlage (200) mit einem Pulverbett (210), umfassend die Schritte:
- Bereitstellen eines Pulvers (40, 41, 42),
- Bereitstellen eines Pulver-Datensatzes (D40, D41, D42) für das Pulver (40, 41, 42),
- Herstellen des Objekts (100) durch selektives Verfestigen des Pulvers (40, 41, 42) unter Anwendung von Prozessparametern (P100),
- Aktualisieren des Pulver-Datensatzes (D40, D41, D42) mit zumindest einem Teil der Prozessparameter (P100) und/oder davon abgeleiteten Parametern.

2. Verfahren nach Anspruch 1, wobei das Aktualisieren des Pulver-Datensatzes (D40, D41, D42) ein Selektieren, insbesondere ein Komprimieren von Prozessparametern (P100) umfasst.

3. Verfahren nach Anspruch 1 oder 2, wobei der Pulver-Datensatz (D40, D41, D42) zumindest einen oder mehrere der folgenden Prozessparameter (P100) umfasst:
- Temperaturverlauf im Pulverbett,
- Maximaltemperatur im Pulver,
- Belichtungsdauer des Pulvers,
- Belichtungsintensität,
- Belichtungshäufigkeit des Pulvers,
- Absauggeschwindigkeit von Rest-Pulver,
- Siebgröße einer Absaugeinrichtung,
- Verweildauer des Pulvers im Pulverbett,
- Atmosphäre in der Anlage
- Korn-Rundheit,
- Korngrößenverteilung,
- Kornrundheit,
- Pulver-Dichte.

4. Verfahren nach einem der vorhergehenden Ansprüche, wobei das Pulver (40, 41, 42) aus zumindest einem Gebinde (B40, B41, B42) stammt, wobei der jeweilige Pulverdatensatz (D40, D41, D42) dem Gebinde (B40, B41, B42) eindeutig zugeordnet ist.

5. Verfahren nach einem der vorhergehenden Ansprüche, wobei der aktualisierte Pulver-Datensatz (D40*, D41*, D42*) einem Baujob-Datensatz (D100) zugeordnet wird.

6. Verfahren nach einem der vorhergehenden Ansprüche, wobei der aktualisierte Pulver-Datensatz (D40*, D41*, D42*) den Prozessparametern (P100) zugeordnet wird.

7. Verfahren nach einem der vorhergehenden Ansprüche, wobei das Pulver (40, 41, 42) aus einem ersten Gebinde (B10) bereitgestellt wird, umfassend ein Rückführen von nach Fertigstellung des Objekts (100) verbleibenden Pulver (40, 41, 42) in das erste Gebinde (B10), wenn die aktualisierten Pulver-Daten (D40*, D41*, D42*) definierbare Grenzwerte nicht überschreiten.

8. Verfahren nach einem der vorhergehenden Ansprüche, umfassend ein Auslesen des Pulver-Datensatzes (D40, D41, D42) durch eine Steuereinheit (250) der Anlage (200) und Anpassen der Prozessparameter (P100) auf Basis des Pulver-Datensatzes (D40, D41, D42).

9. Verfahren nach einem der vorhergehenden Ansprüche, umfassend ein Analysieren des nach dem Fertigstellen des Objekts (100) verbleibenden Pulvers (40, 41, 42) und Aktualisieren des Pulver-Datensatzes (D40, D41, D42) auf Basis der Analyse.

10. Verfahren nach einem der vorhergehenden Ansprüche, umfassend ein Analysieren des Objekts (100) und/oder eines im selben Druckvorgang oder unter Verwendung derselben Prozessparameter (P100) hergestellten Testkörpers (T100) und Aktualisieren des Pulver-Datensatzes (D40, D41, D42) auf Basis der Analyse.

11. Computerimplementiertes Verfahren zum Selektieren eines Pulvers (40, 41, 42) und/oder eines Pulver-Gebindes (B40, B41, B42) zum Herstellen eines Objekts (100), wobei für die zur Auswahl stehenden Pulver-Gebinde (B40, B41, B42) Pulver-Datensätze (D40, D41, D42) bereitgestellt sind, umfassend die Schritte:
- Bestimmen ein oder mehrerer Güte-Anforderungen an das Objekt (100),
- Auswählen des Pulvers (40, 41, 42) durch Abgleichen der Güte-Anforderungen (Q100) mit den Pulver-Datensätzen (D40, D41, D42) .

12. Steuerung (250) für eine Anlage (200) mit einem Pulverbett (210) zum Herstellen von Objekten (100) mit einem pulverbasierten 3D-Druckverfahren, ausgebildet zum Durchführen eines Verfahrens nach einem der Ansprüche 1 bis 9, aufweisend eine Schnittstelleneinheit, die zum Aktualisieren des Pulver-Datensatzes (D40, D41, D42) zumindest einen Teil der Prozessparameter (P100) und/oder davon abgeleiteten Parameter bereitstellt und/oder anfordert.

13. Koordinationseinheit (300) für ein oder mehrere Anlagen (200) mit einem Pulverbett (210) zum Herstellen von Objekten (100) mit einem pulverbasierten 3D-Druckverfahren, ausgebildet zum Bereitstellen von Pulver-Datensätzen (D40, D41, D42) und zum Bereitstellen und/oder Anfordern von Prozessparametern (P100) und/oder davon abgeleiteten Parametern zum Aktualisieren der Pulver-Datensätze (D40, D41, D42) ausgebildet ist.

14. Verfahren zum Erzeugen von Trainingsdaten für neuronale Netzwerke, umfassend:
- Herstellen von mehreren Objekten (100) nach einem Verfahren nach einem der Ansprüche 1 bis 9,
- Bereitstellen von Pulver-Datensätzen (D40, D41, D42), aktualisierten Pulver-Datensätzen (D40*, D41*, D42*) und den dazugehörigen Baujob-Datensätzen (D100) und/oder Prozessparameter und
- jeweiliges Verknüpfen des Pulver-Datensatzes (D40, D41, D42) mit dem dazugehörigen Baujob-Datensatz (D100) und dem daraus resultierenden aktualisierten Pulver-Datensatz (D40*, D41*, D42*).
